# FASCICULE DE BREVET EUROPEEN

(11) **EP 0 815 307 B1**
(45) Date de publication et mention de la délivrance du brevet: **21.03.2001**
(21) Numéro de dépôt: 97901119.4
(22) Date de dépôt: 17.01.1997
(51) Int. Cl.: D04H 13/00, D04H 1/00

(54) **PROCEDE ET DISPOSITIF DE FABRICATION D'UN MATERIAU COMPOSITE**
VERFAHREN UND VORRICHTUNG ZUR HERSTELLUNG EINES KOMPOSITMATERIALS
METHOD AND DEVICE FOR MAKING A COMPOSITE MATERIAL

(30) Priorité: 19.01.1996 FR 9600578
(43) Date de publication de la demande: 07.01.1998
(73) Titulaire: VETROTEX FRANCE S.A., F-73000 Chambéry (FR)
(72) Inventeur: DEBALME, Jean-Paul, F-73000 Chambéry (FR); LOUBINOUX, Dominique, F-38600 Terrasse (FR)
(74) Mandataire: Breton, Jean-Claude
(86) Numéro de dépôt international: FR9700101
(87) Numéro de publication internationale: WO9726397

(56) Documents cités:
- WO-A-94/21452
- US-A- 4 818 318
- US-A- 5 021 289
- US-A- 5 227 236
- US-A- 5 264 274

## Description

La présente invention a pour objet un procédé et un dispositif de mise en oeuvre dudit procédé pour la fabrication d'un matériau composite, formé par l'association de fibres de renforcement, telles que des fibres de verre, et d'une matière organique thermoplastique.

Il existe déjà de nombreux procédés qui permettent d'associer des fibres de verre et une matière organique thermoplastique. Les fibres de verre peuvent se présenter sous la forme de mat de fils continus ou de fils coupés, de tissus; la matière organique peut se présenter sous la forme liquide ou à l'état solide sous la forme de poudre, de film, de feuille ou de fils. Le choix de la forme sous laquelle les fibres de verre et la matière organique sont associées dépend de la configuration de la pièce à réaliser et des propriétés requises pour ladite pièce.

Aussi, lorsque la configuration de la pièce est relativement simple et que ses propriétés mécaniques doivent être élevées, le renfort choisi se présente le plus souvent sous la forme de tissu. Le certificat d'utilité FR-2 500 360 illustre l'emploi de ce type de renfort : les pièces fabriquées sont des panneaux plats ou des pièces courbes qui sont réalisés par pressage à chaud de couches superposées de tissus de fils de verre par exemple. La matière organique thermoplastique associée aux tissus de fils de verre se présentant sous la forme filamentaire. Ces fils thermoplastiques peuvent être des fils de chaîne ou de trame ou les deux à la fois. Lors du pressage à chaud ces fils fondent et, au refroidissement, vont lier ensemble les couches de tissus de verre. Les laminés composites ainsi produits se caractérisent par une forte teneur en fibres de renforcement.

Le procédé de fabrication de ces laminés est un procédé discontinu selon lequel on superpose plusieurs couches de tissus puis on chauffe l'ensemble desdites couches tout en les comprimant dans une presse statique.

Plus récemment, le brevet US-A-5 227 236 a proposé un perfectionnement au procédé précédemment décrit : le perfectionnement consiste en l'utilisation de fils mixtes ou, de préférence, co-mêlés, ensimés avec une dispersion ou une émulsion d'un polymère thermoplastique. Par fils mixtes il faut entendre des fils obtenus par la réunion et le bobinage simultané de fils de renfort, tels que des fils de verre, et des fils organiques thermoplastiques ; par fils co-mêlés il faut entendre des fils obtenus par la réunion et le bobinage d'une multiplicité de filaments de renfort et de filaments organiques thermoplastiques, lesdits filaments ayant été au préalable séparés par des moyens mécaniques de leurs fils d'origine. Le point de fusion du polymère utilisé pour ensimer ces fils est inférieur à celui des filaments organiques. Ces fils ainsi ensimés sont utilisés sous forme de tissus. Grâce à ce perfectionnement, le temps nécessaire pour réaliser une plaque par pressage à chaud se trouve réduit. Cependant il s'agit là encore d'un procédé discontinu.

Pour la réalisation de pièces composites de configuration complexe, il est connu d'utiliser un renfort qui présente l'avantage d'être sous la forme d'un fil continu qui peut se déplacer avec la matière organique thermoplastique sous l'effet de la pression exercée lors de l'opération de moulage.

La fabrication d'un tel produit apte au moulage est décrit, par exemple, dans le brevet US-A-4 277 531. D'après ce brevet, un mat de fils continu de verre est, dans un premier temps, aiguilleté afin de lui conférer la cohésion nécessaire pour sa manipulation, dans un deuxième temps, sur une ligne de fabrication, deux bandes de mat ainsi aiguilleté sont amenées en suivant des trajets parallèles jusqu'à un dispositif de pressage à chaud où elles sont réunies. La face inférieure de la bande la plus basse repose sur un film de matière organique thermoplastique ; la face supérieure de la bande la plus haute est également recouverte d'un film de même nature. Juste avant la réunion des bandes de mat, un dispositif dépose une couche de matière thermoplastique à l'état liquide. Cet ensemble est simultanément chauffé et comprimé de manière à assurer la fusion au moins partielle des films de matière organique et, après refroidissement la liaison des fils constituant les mats.

Ce procédé présente l'avantage de permettre la fabrication en continu d'une feuille d'un matériau composite prêt à être moulé. Cependant si le produit ainsi obtenu est aisément moulable, la teneur en fibres de renforcement dans la pièce finale reste limitée.

La présente invention a pour objet un procédé qui permet de fabriquer en continu un produit composite dont la teneur en fibres de renforcement est supérieure à celle atteinte par les procédés en continus connus à ce jour.

La présente invention a pour objet un procédé qui permet de fabriquer en continu un produit composite sous la forme de plaque, à une cadence au moins aussi élevée que celle des meilleurs procédés en continu connus dans ce domaine.

La présente invention a également pour objet un procédé qui permet de fabriquer en continu un produit composite sous la forme de plaque, qui réunit l'aptitude au moulage propre aux produits qui contiennent des renforts non tissés et qui confère au produit obtenu par moulage le niveau de propriétés mécaniques qui caractérise les produits contenant des renforts tissés.

Les objectifs de l'invention sont atteints grâce à un procédé qui consiste :
- à déposer en continu sur un substrat en mouvement des fils de verre dont au moins 80 % en poids d'entre eux sont des fils co-mêlés constitués de filaments de verre et de filaments de matière organique thermoplastique intimement mélangés, la quantité de verre déposée représentant plus de 40 % en poids de la quantité totale de matière déposée sous la forme de fils de verre et de matière organique,
- à transférer cet ensemble fils de verre-matière organique dans plusieurs zones où ledit ensemble est chauffé, comprimé et refroidi, le chauffage et/ou le refroidissement dudit ensemble étant accompagné simultanément de sa compression,
- à découper ledit ensemble sous la forme de plaques ou à l'enrouler sur un tambour en rotation.

Par fils co-mêlés, on entend des fils dans lesquels des filaments de verre et des filaments de matière organique thermoplastique sont intimement mêlés. Ces fils peuvent être obtenus par des moyens mécaniques ainsi que le décrit, par exemple, le brevet US-A-4 818 318. D'après ce brevet, les fils de renfort et les fils thermoplastiques sont extraits de leurs enroulements respectifs, puis les filaments qui les constituent sont séparés sous la forme de deux nappes de même largeur. Ces nappes sont ensuite mises en contact l'une avec l'autre pour ne former qu'une seule nappe en alternant le plus régulièrement possible les deux sortes de filaments. L'ensemble des filaments ainsi mêlés sont réunis en un seul fil.

Par fils co-mêlés, il faut également entendre ceux qui sont directement obtenus lors de la fabrication des filaments organiques thermoplastiques et des filaments de verre. Des procédés permettant la fabrication d'un tel fil sont décrits, par exemple, dans les demandes de brevet EP-A-0 599 695 et EP-A-0 616 055. Dans ces procédés, des filaments obtenus par extrusion et étirage mécanique d'une matière organique thermoplastique à l'état fondu sont étirés sous la forme d'une nappe et sont mêlés à un faisceau ou à une nappe de filaments de verre (ou sont projetés dans ledit faisceau ou ladite nappe), lesdits filaments de verre étant également en cours d'étirage. Grâce à ce genre de procédé on obtient ainsi directement un fil au sein duquel les différents filaments sont mélangés de façon homogène.

Par substrat en mouvement on entend une bande de matière formée par l'association de fils de verre et d'une matière organique thermoplastique, par exemple une bande de tissu formé de fils de verre dont au moins 80 % en poids d'entre eux sont des fils co-mêlés tels que définis précédemment.

Par substrat en mouvement on entend aussi un convoyeur qui transfère, d'un point à un autre d'une ligne de fabrication, l'association fils de verre - matière organique.

Selon un premier mode de réalisation du procédé selon l'invention, les fils de verre et la matière déposés en continu sur le substrat sont exclusivement sous la forme d'au moins une bande de tissu et/ou de tricot formés au moins en partie de fils co-mêlés.

Les tissus utilisés dans le cadre de l'invention comprennent des fils co-mêlés qui peuvent être des fils de chaîne ou de trame, de préférence les deux à la fois. De même, les tricots utilisés peuvent être constitués en partie ou en totalité de fils co-mêlés.

Selon un deuxième mode de réalisation de l'invention, la matière déposée sur le substrat est exclusivement sous la forme de fils coupés.

Selon un troisième mode de réalisation, la matière déposée sur le substrat est exclusivement sous la forme de fils continus. Ces fils peuvent être déposés dans le sens du déplacement du substrat ou sous la forme de boucles superposées.

Selon un quatrième mode de réalisation de l'invention, on dépose sur un substrat au moins une bande de tissu et/ou de tricot formés au moins en partie de fils co-mêlés et on dépose également au moins une nappe de fils co-mêlés, coupés ou continus, la ou lesdites nappes étant mises en contact avec au moins une des faces de la ou desdites bandes, puis on chauffe l'ensemble nappe(s) de fils-bande(s) de tissu et/ou tricot ainsi formé et on le comprime sur ses deux faces avant de le refroidir et de le découper.

Selon une première variante de ce dernier mode de réalisation :
- a) - on dépose sur un convoyeur en mouvement une nappe de fils co-mêlés coupés,
- b) - on dépose sur ladite nappe une bande de tissu formé exclusivement de fils co-mêlés,
- c) - on dépose éventuellement sur la bande de tissu une seconde nappe de fils co-mêlés coupés,
- d) - on transfère l'ensemble, nappe(s)-bande(s) ainsi formé dans une première zone où ledit ensemble est chauffé, puis dans une deuxième zone où ledit ensemble est simultanément comprimé et chauffé,
- e) - puis on transfère ledit ensemble dans une troisième zone dans laquelle il est comprimé et refroidi,
- f) - on découpe ledit ensemble ainsi refroidi à la sortie de la troisième zone.

Selon une deuxième variante de ce mode de réalisation :
- a) - on dépose sur un convoyeur en mouvement une première bande de tissu formé exclusivement de fils co-mêlés,
- b) - on dépose sur cette bande une nappe de fils co-mêlés coupés,
- c) - on dépose sur cette nappe une seconde bande de tissu exclusivement formé de fils co-mêlés,
- d) - on dépose éventuellement sur cette dernière bande de tissu une seconde nappe de fils co-mêlés coupés,
- e) - on transfère l'ensemble bande(s)-nappe(s) ainsi formé dans une première zone où ledit ensemble est chauffé, puis dans une deuxième zone où ledit ensemble est simultanément comprimé et chauffé,
- f) - on transfère ledit ensemble dans une troisième zone dans laquelle il est comprimé et refroidi,
- g) - on découpe l'ensemble ainsi refroidi à la sortie de la troisième zone.

Selon une troisième variante de ce mode de réalisation :
- a) - on dépose sur un convoyeur en mouvement une première bande de tissu formé exclusivement de fils co-mêlés,
- b) - on dépose sur cette bande un ou plusieurs fils co-mêlés continus,
- c) - on dépose sur le ou lesdits fils continu(s) une seconde bande de tissu formé exclusivement de fils co-mêlés,
- d) - on dépose, éventuellement, sur cette dernière bande de tissu un ou plusieurs fils co-mêlés continus ou une nappe de fils co-mêlés coupés,
- e) - on transfère cet ensemble bande(s)-nappe(s) ainsi formé dans une première zone où ledit ensemble est chauffé, puis dans une deuxième zone où ledit ensemble est simultanément comprimé et chauffé,
- f) - on transfère ledit ensemble dans une troisième zone dans laquelle il est comprimé et refroidi,
- g) - on découpe l'ensemble ainsi refroidi à la sortie de la troisième zone.

Dans le cadre du quatrième mode de réalisation de l'invention et de ses variantes, la largeur de la (ou des) nappe(s) de fils co-mêlés déposée(s) est de préférence égale à la largeur de la (ou des) bande(s) de tissu et/ou de tricot à laquelle (auxquelles) elle(s) est (sont) associée (s).

Lorsque l'on associe des bandes de tissu et/ou de tricot et des nappes de fils coupés ou continus, on obtient des plaques dont la partie médiane et/ou au moins l'une des couches superficielles sont constituées d'au moins une couche de fils de verre susceptibles de se déplacer dans un moule lors de l'opération de moulage desdites plaques.

Lorsque l'on dépose une nappe de fils coupés, celle-ci peut être obtenue à partir d'un dispositif de répartition situé à la base d'une trémie de stockage de fils co-mêlés préalablement coupés. Il est également possible d'obtenir cette nappe directement à partir d'une machine de coupe alimentée en permanence par une multiplicité de mèches de fils co-mêlés extraites d'une multiplicité d'enroulements.

La couche de fils co-mêlés continus peut être obtenue par la projection d'un ou, de préférence, de plusieurs fils à l'aide d'un ou plusieurs dispositifs alimentés en permanence par un ou plusieurs fils extraits d'enroulements.

Les nappes ou les couches de fils déposées en continu sont, de préférence, de même largeur que les bandes de tissu utilisées.

Dans le procédé selon l'invention, le poids de verre déposé peut représenter au moins la moitié du poids total de matière déposée sur le convoyeur.

La description détaillée ci-après permettra de mieux apprécier l'invention et les avantages qu'elle présente. Cette description sera illustrée par plusieurs figures qui représentent :
- la figure 1 : un dispositif qui permet une première mise en oeuvre de l'invention,
- la figure 2 : un dispositif qui permet une deuxième mise en oeuvre de l'invention,
- la figure 3 : un dispositif qui permet une troisième mise en oeuvre de l'invention,
- la figure 4 : un graphique sur lequel sont portées les caractéristiques mécaniques de produits composites obtenus selon des procédés connus et selon l'invention.

Ces différents dispositifs sont décrits à titre d'exemples et ne peuvent en aucune manière constituer une limitation de l'invention.

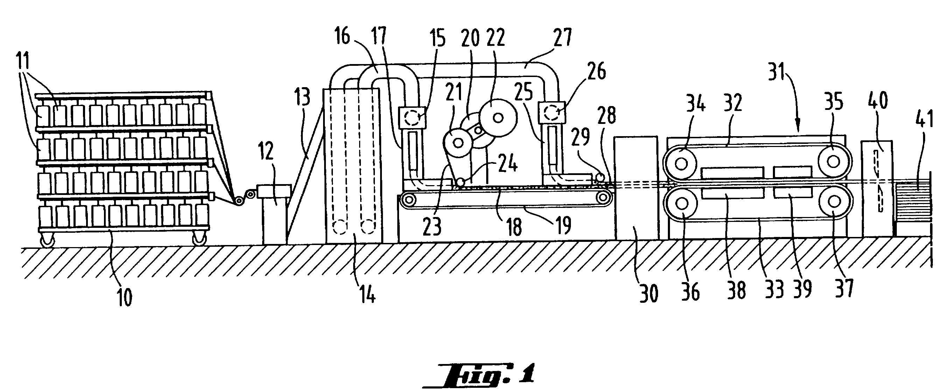

La figure 1 représente schématiquement une ligne de production de plaques composites qui comprend en amont, au moins un cantre 10 à plusieurs étages sur lesquels sont disposés une multiplicité d'enroulements de fils co-mêlés 11. Les fils extraits de ces enroulements sont guidés et assemblés par différents organes avant d'entrer dans une machine de coupe 12. Les fils coupés sont recueillis et transférés au moyen d'une bande transporteuse 13 dans un silo de stockage 14.

Un condensateur à tambour perforé 15, relié par un conduit 16 à la base du silo 14, alimente en fils coupés une première cheminée nappeuse 17 telle qu'utilisée couramment dans l'industrie textile.

Cette cheminée 17, équipée d'un dispositif doseur, répartit les fils coupés sous la forme d'une première nappe 18 sur un convoyeur 19 en mouvement.

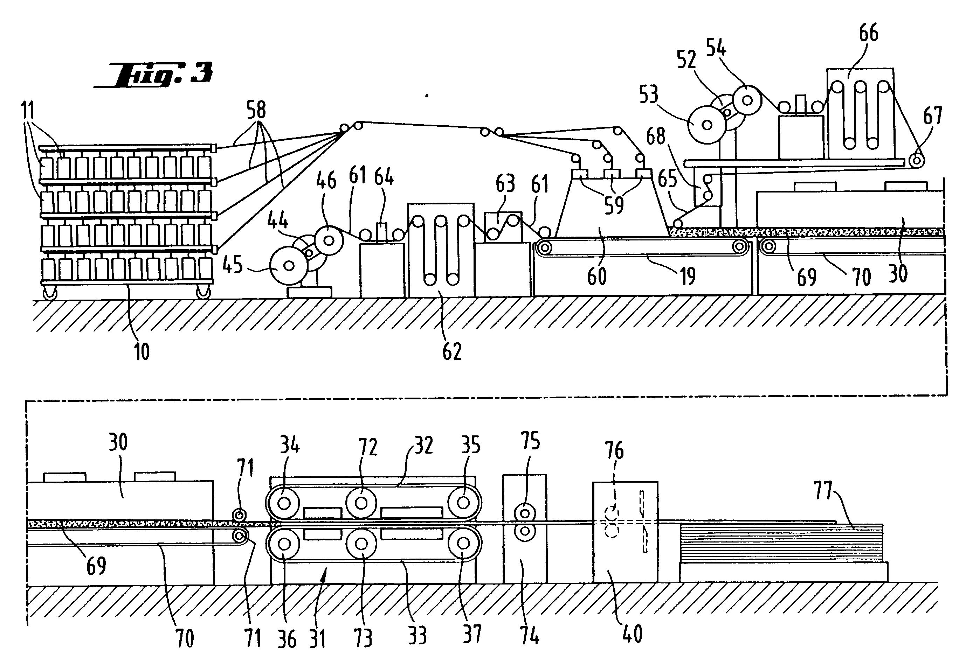

En aval de la cheminée 17 et au-dessus du convoyeur 19 est installé un dispositif à barillet 20 muni de deux axes libres en rotation et supportant deux rouleaux de tissus 21 et 22, formés de fils co-mêlés. Une bande de tissu 23, extraite du rouleau 21, vient s'appliquer au moyen d'un dispositif 24 sur la nappe 18. Lorsque le rouleau 21 est terminé, le dispositif 20 pivote à 180° afin de poursuivre le déroulement d'une bande de tissu à partir du rouleau 22. Pour faciliter le changement de rouleau, un accumulateur de tissu et un dispositif assurant le positionnement de la bande 23 (non représentés) sont implantés entre le barillet 20 et le dispositif 24. Ces dispositifs sont représentés à la figure 3, qui illustre lui un autre mode de réalisation de l'invention, et sont commentés ci-après.

En aval du dispositif 20 est implantée une seconde cheminée 25, alimentée également en fils coupés grâce à un condensateur à tambour perforé 26 relié par un conduit 27 au silo 14. Cette cheminée 25, équipée d'un dispositif doseur, répartit les fils coupés sous la forme d'une seconde nappe 28 sur la bande de tissu 23. Cette nappe est comprimée au moyen d'un dispositif 29 placé à la sortie de ladite cheminée.

Ce « sandwich » formé d'une bande de tissu de fils co-mêlés prise entre deux nappes de fils coupés co-mêlés, est introduit dans un four de préchauffage 30. Ce four permet de chauffer ce sandwich à une température supérieure à la température de fusion de la matière organique thermoplastique dont sont formés une partie des filaments mélangés aux filaments de verre. Ce traitement thermique peut être effectué, par exemple, au moyen d'air chaud.

Le sandwich ainsi chauffé pénètre alors dans une presse 31 d'un type connu, par exemple, telle que celle décrite dans le brevet US-A-4 277 531.

Cette presse comprend pour l'essentiel deux bandes 32 et 33, mues respectivement par les rouleaux 34, 35 pour la première, 36 et 37 pour la seconde. Les rouleaux 34 et 36 sont chauffés, les rouleaux 35 et 37 sont refroidis. Elle comprend également, entre ces deux paires de rouleaux, deux zones dans lesquelles le sandwich est comprimé sur ses deux faces et entraîné. Dans la première zone 38, les moyens de pressage contribuent au chauffage du sandwich, à une température supérieure à la température de fusion de la matière organique thermoplastique ; dans la seconde zone 39, les moyens de pressage remplissent une fonction de refroidissement qui est complétée par l'action des rouleaux 35 et 37.

De la presse 31 sort une bande rigide, refroidie, qui est découpée par un dispositif automatique à massicot 40 sous la forme de plaques 41.

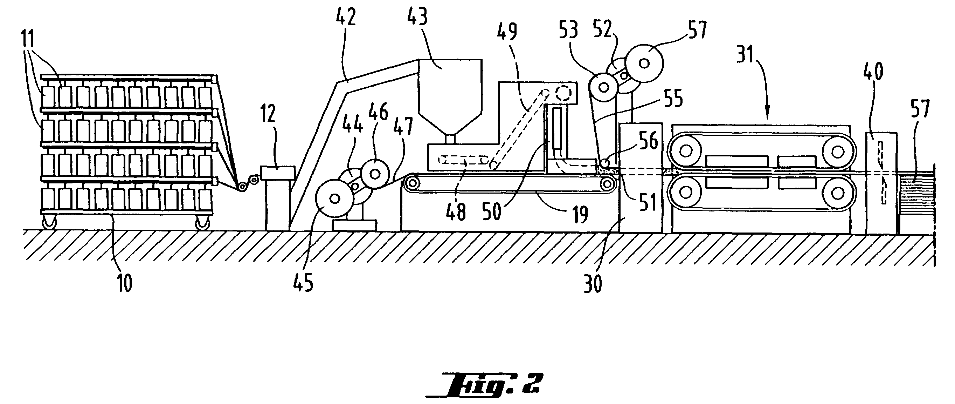

La figure 2 représente schématiquement une ligne de production de plaques composites selon un deuxième mode de réalisation de l'invention. Comme dans le mode de réalisation précédent un cantre 10, sur lequel sont disposés une multiplicité d'enroulements de fils co-mêlés 11, est implanté au début de la ligne. Ces fils alimentent également une machine de coupe 12. Les fils coupés par ce moyen sont recueillis et transférés par une bande transporteuse 42 jusqu'au sommet d'une trémie 43, disposée au-dessus d'un convoyeur 19 en mouvement.

En amont de ce convoyeur est installé un dispositif à barillet 44 muni de deux axes libres en rotation et supportant deux rouleaux de tissu 45 et 46, formés de fils co-mêlés. Une bande de tissu 47, extraite du rouleau 46, vient s'appliquer sur le convoyeur 19. La trémie 43, qui permet de stocker une quantité suffisante de fils pour intervenir sur la machine de coupe sans interrompre la fabrication, sert à alimenter, par l'intermédiaire de bandes transporteuses 48 et 49, une cheminée nappeuse 50. Cette dernière délivre une nappe de fils coupés 51 sur la bande 47 en mouvement.

En aval de la cheminée 50 est implanté, au-dessus du convoyeur, un second dispositif à barillet 52 muni de deux axes libres en rotation qui supportent deux rouleaux de tissu 53 et 54, également formé de fils co-mêlés. Une bande de tissu 55 est extraite du rouleau 53 et vient s'appliquer sur la nappe 51, à la sortie de la cheminée 50, grâce à un dispositif 56. Comme pour le premier mode de réalisation, un accumulateur de tissu et un dispositif assurant le positionnement de la bande de tissu (non représentés) sont implantés entre le barillet 44 et la partie amont du convoyeur 19, et entre le barillet 52 et le dispositif 56 (voir figure 3).

Ce « sandwich » formé d'une nappe de fils coupés prise entre deux bandes de tissu, est, comme précédemment, introduit dans un four de préchauffage 30 avant de pénétrer dans une presse 31 identique à celle décrite dans le cadre du premier mode de réalisation de l'invention. La plaque rigide qui en sort, est découpée par un dispositif à massicot 40 sous la forme de plaques 57.

La figure 3 représente schématiquement une ligne de production de plaques composites selon un troisième mode de réalisation de l'invention.

Comme dans les modes de réalisation précédemment décrits, un cantre 10, sur lequel sont disposés une multiplicité d'enroulements 11 de fils co-mêlés, est installé en amont de la ligne. Ces fils sont extraits des enroulements 11 puis guidés et réunis par différents dispositifs pour former des mèches 58.

L'extraction de ces fils est réalisée au moyen de trois dispositifs 59 qui sont à la fois des dispositifs d'entraînement et de répartition desdites mèches. Ces dispositifs sont enfermés dans un carter 60 implanté au-dessus de la partie amont du convoyeur 19.

Cette ligne comprend également deux dispositifs à barillet 44 et 52 qui supportent des rouleaux de tissu formé de fils co-mêlés implantés, comme sur la ligne représentée figure 2, en amont et en aval des dispositifs 59 de répartition des mèches.

Une première bande de tissu 61, constitué fils co-mêlés, est dévidée à tension constante du rouleau 46. Cette bande passe dans un accumulateur de tissu 62, puis dans un cadre rotatif 63 équipé d'un détecteur de lisière qui permet de la positionner avec précision avant que ladite bande vienne en contact avec le convoyeur 19. Lorsque le rouleau 46 est achevé, le barillet 44 pivote afin de placer le rouleau 45 en position de dévidage.

La fin de la bande 61 est arrêtée au niveau du dispositif 64 le temps nécessaire pour la coudre avec le début de la bande du rouleau 45. La réserve 62 assure pendant ce temps l'alimentation de la ligne en tissu.

Une deuxième bande de tissu 65, également constituée de fils co-mêlés, est déposée sur la nappe de mèches 58 qui ont été elles-mêmes déposées sur la bande de tissu 61. Cette bande 65 est dévidée à tension constante du rouleau 54 ; elle passe dans un accumulateur de tissu 66, puis après un renvoi 67, dans un cadre rotatif 68 équipé d'un détecteur de lisière qui permet de positionner avec précision ladite bande par rapport à la bande 61 et la nappe de mèches 58.

Le sandwich 69, formé par la nappe de mèches 58 et les bandes 61 et 65, entre dans un four à air chaud 30 supporté par une bande 70 ajourée et peu adhésive, par exemple une grille de verre revêtu de PTFE. Pendant la traversée de ce four, le sandwich 69 est porté à une température supérieure à la température de fusion de la matière organique thermoplastique. A la sortie du four, le volume du sandwich est réduit en le comprimant légèrement entre les rouleaux 71.

Comme dans les modes de réalisation précédents, le sandwich entre ensuite dans une presse 31 équipée de deux bandes 32 et 33 dans laquelle il est porté à une température supérieure à la température de fusion de la matière organique thermoplastique. Entre les rouleaux 34 et 36 qui sont chauffés et les rouleaux 35 et 37 qui sont refroidis, cette presse est équipée d'une paire de rouleaux 72 et 73 qui sont chauffés. Ces rouleaux compriment également le sandwich et favorisent l'élimination de l'air qui y demeure encore.

De la presse 31 sort une bande rigide, refroidie, qui passe dans un dispositif 74, équipé de scies 75 qui éliminent les lisières de ladite bande.

Comme dans les modes de réalisation précédents, cette bande est coupée transversalement par dispositif à massicot 40, commandé automatiquement par des rouleaux d'appel 76 réglés pour obtenir des plaques 77 d'une longueur déterminée.

Dans ces exemples de réalisation de l'invention, tel ou tel dispositif peut être remplacé par un autre dispositif remplissant globalement la même fonction. Ainsi la presse 31 pourrait être remplacée par une calandre équipée de plusieurs paires de cylindres assurant une décroissance progressive de la température du sandwich, ou par une calandre formée d'une paire unique de cylindres thermostatés suivie de doubles bandes assurant le déplacement et le refroidissement dudit sandwich.

Le procédé selon l'invention et sa mise en oeuvre décrits précédemment permettent de réaliser en continu des plaques composites, dont la teneur en fil de verre peut atteindre et dépasser 60% en poids.

Ainsi, à titre d'exemple, des plaques composites ont été réalisées dans les conditions suivantes en utilisant une ligne de production telle qu'illustrée par la figure 3.

Les tissus utilisés ont une armure sergé 2 lié 2 équilibré de 650 g/m2 comprenant 4 stratifils (rovings) identiques en chaîne et en trame. Ces stratifils comportent 800 filaments de verre d'un diamètre moyen de 17 micromètres et 800 filaments de polypropylène d'un diamètre moyen de 22 micromètres. La nappe de fils co-mêlés coupés est formée à partir des mêmes stratifils.

Une première bande de tissu (61), de 1,4 mètre de largeur, est déroulée et déposée sur le convoyeur (19) qui se déplace à la vitesse de 2 mètres par minute.

Les machines de coupe (59), disposées au-dessus du convoyeur (19), délivrent 8 kilogrammes de fils coupés par minute. Ces fils coupés, d'une longueur de 38 millimètres, se déposent sur la bande (61) et forment une nappe de 2,8 kilogrammes par mètre carré.

Une seconde bande de tissu (65) est déroulée et déposée sur la nappe ainsi formée.

Le sandwich (69) ainsi constitué passe dans le four (30) chauffé à 200°C au moyen d'une circulation d'air chaud. A la sortie du four (30), le sandwich (69) est comprimé à l'aide des deux rouleaux (71) refroidis à l'eau. Le sandwich, dont l'épaisseur est alors d'environ 5 millimètres d'épaisseur, pénètre dans la presse à bandes (31). Dans la première zone de cette presse, comprise entre les paires de rouleaux (34, 36) et (72, 73) qui sont chauffés, le sandwich est porté à une température de l'ordre de 230°C. Dans la seconde zone de cette presse, comprise entre les paires de rouleaux (72, 73) et (35, 37), ces derniers étant refroidis, le sandwich est progressivement refroidi jusqu'à une température de l'ordre de 30°C. Pendant la traversée de ces deux zones, le sandwich est soumis à une pression de l'ordre de 1,5 bar. Il sort de la presse (31) un produit plan dont l'épaisseur est d'environ 3 millimètres, qui est émargé puis découpé sous la forme de plaques. Une plaque d'un mètre carré pèse environ 4,2 kilogrammes.

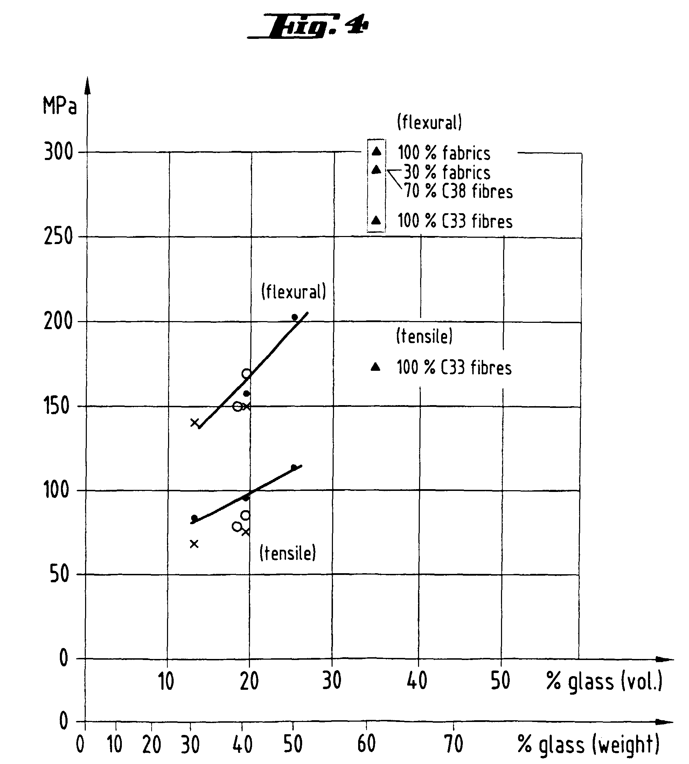

Sur le graphique représenté à la figure 4, sont portées en ordonnée les valeurs des résistances à la rupture en traction et en flexion, exprimées en mégapascals, de différents produits composites verre-polypropylène dont la teneur en verre, exprimée en pourcentages volumiques et pondéraux, est portée en abscisses.

Les produits, dont la teneur en verre plafonne à 50 % en poids, sont obtenus par des procédés de fabrication en continu de l'art antérieur ; ceux dont la teneur en verre est égale à 60 % en poids sont obtenus par le procédé selon l'invention.

Les procédés de fabrication en continu de l'art antérieur associent par chauffage et compression des fils de verre et des films de polypropylène.

Ces fils de verre peuvent se présenter dans le produit final soit sous la forme d'un mat de fils coupés (symbole X), soit sous la forme d'un mat de fils continus (symbole 0, . ).

Les valeurs des résistances à la rupture des produits obtenus selon la présente invention (symbole Δ) concernent aussi bien des produits fabriqués uniquement à partir de tissus, eux-mêmes exclusivement constitués de fils co-mêlés, que des produits fabriqués uniquement à partir de fils co-mêlés coupés (C 33 - longueur 33 millimètres) et des produits mixtes tels que celui dont la fabrication a été décrite, à titre d'exemple, précédemment (30 % tissus ; 70 % fils C 38).

Indépendamment du fait que le procédé selon l'invention permet d'obtenir en continu des produits composites dont la teneur en verre est plus élevée que celle des produits obtenus selon les procédés connus, l'extrapolation des droites passant entre les valeurs des résistances des produits connus montre que les résistances des produits selon l'invention sont au moins égales sinon supérieures à celles que l'on serait en droit d'attendre du fait de la seule augmentation de la teneur en verre. Cela démontre que la qualité du mouillage des fils de verre par la matière organique thermoplastique atteint un niveau exceptionnel.

Les produits obtenus par le procédé selon l'invention sont particulièrement bien adaptés pour obtenir par moulage ou par estampage des pièces de forme complexe comme, par exemple, les très nombreuses pièces composites qui entrent dans la conception et la fabrication des véhicules automobiles. A cet égard, les produits mixtes alliant tissus et fils coupés ou continus concilient à la fois la bonne répartition du renfort dans un moule de forme complexe et les propriétés mécaniques élevées qui sont demandées pour la pièce réalisée.

## Revendications

1. Procédé de fabrication d'un produit composite obtenu par l'association de fils de verre et d'une matière organique thermoplastique à l'état filamentaire qui consiste :
• à déposer en continu sur un substrat en mouvement des fils de verre dont au moins 80 % en poids d'entre eux sont des fils co-mêlés constitués de filaments de verre et de filaments de matière organique thermoplastique intimement mélangés, la quantité de verre déposée représentant plus de 40 % en poids de la quantité totale de matière déposée sous la forme de fils de verre et de matière organique,
• à transférer cet ensemble fils de verre-matière organique dans plusieurs zones où ledit ensemble est chauffé, comprimé et refroidi, le chauffage et/ou le refroidissement dudit ensemble étant accompagné simultanément de sa compression,
• à découper ledit ensemble sous la forme de plaques ou à l'enrouler sur un tambour en rotation.

2. Procédé selon la revendication 1, **caractérisé en ce que** le substrat est une bande de tissu formé de fils de verre dont au moins une partie d'entre eux sont des fils co-mêlés constitués de filaments de verre et de filaments de matière organique thermoplastique.

3. Procédé selon la revendication 1, **caractérisé en ce que** le substrat est un convoyeur.

4. Procédé selon l'une quelconque des revendications précédentes, **caractérisé en ce que** les fils de verre et la matière déposés sont exclusivement sous la forme d'au moins une bande de tissu et/ou de tricot formé au moins en partie de fils co-mêlés.

5. Procédé selon l'une quelconque des revendications 1 à 3, **caractérisé en ce que** la matière déposée est exclusivement sous la forme de fils coupés.

6. Procédé selon l'une quelconque des revendications 1 à 3, **caractérisé en ce que** la matière déposée est exclusivement formée de fils continus.

7. Procédé selon l'une quelconque des revendications 1 à 3, **caractérisé en ce que** l'on dépose sur le substrat au moins une bande de tissu et/ou de tricot formés au moins en partie de fils co-mêlés **et en ce que** l'on dépose également au moins une nappe de fils co-mêlés, coupés ou continus, la ou lesdites nappes étant mise en contact avec au moins une des faces de la ou desdites bandes, puis on chauffe l'ensemble nappe(s) de fils-bande(s) de tissu et/ou tricot ainsi formé et on le comprime sur ses deux faces avant de le refroidir et de le découper ou de l'enrouler.

8. Procédé selon la revendication 7, **caractérisé en ce que** :
• a) - on dépose sur un convoyeur en mouvement une nappe de fils co-mêlés coupés,
• b) - on dépose sur ladite nappe une bande de tissu formé exclusivement de fils co-mêlés,
• c) - on dépose éventuellement sur la bande de tissu une seconde nappe de fils co-mêlés coupés,
• d) on transfère l'ensemble, nappe(s)-bande(s) ainsi formé dans une première zone où ledit ensemble est chauffé, puis dans une deuxième zone où ledit ensemble est simultanément comprimé et chauffé,
• e) - puis on transfère ledit ensemble dans une troisième zone dans laquelle il est comprimé et refroidi,
• f) - on découpe ledit ensemble ainsi refroidi à la sortie de la troisième zone.

9. Procédé selon la revendication 7, **caractérisé en ce que** :
• a) - on dépose sur un convoyeur en mouvement une première bande de tissu formé exclusivement de fils co-mêlés,
• b) - on dépose sur cette bande une nappe de fils co-mêlés coupés,
• c) - on dépose sur cette nappe une seconde bande de tissu exclusivement formé de fils co-mêlés,
• d) - on dépose éventuellement sur cette dernière bande de tissu une seconde nappe de fils co-mêlés coupés,
• e) - on transfère l'ensemble bande(s)-nappe(s) ainsi formé dans une première zone où ledit ensemble est chauffé, puis dans une deuxième zone où ledit ensemble est simultanément comprimé et chauffé,
• f) - on transfère ledit ensemble dans une troisième zone dans laquelle il est comprimé et refroidi,
• g) - on découpe l'ensemble ainsi refroidi à la sortie de la troisième zone.

10. Procédé selon la revendication 7, **caractérisé en ce que** :
• a) - on dépose sur un convoyeur en mouvement une première bande de tissu formé exclusivement de fils co-mêlés,
• b) - on dépose sur cette bande un ou plusieurs fils co-mêlés continus,
• c) - on dépose sur le ou lesdits fil(s) continus une seconde bande de tissu formé exclusivement de fils co-mêlés,
• d) - on dépose, éventuellement, sur cette dernière bande de tissu un ou plusieurs fils co-mêlés continus ou une nappe de fils co-mêlés coupés,
• e) - on transfère cet ensemble bande(s)-nappe(s) ainsi formé dans une première zone où ledit ensemble est chauffé, puis dans une deuxième zone où ledit ensemble est simultanément comprimé et chauffé,
• f) - on transfère ledit ensemble dans une troisième zone dans laquelle il est comprimé et refroidi,
• g) - on découpe l'ensemble ainsi refroidi à la sortie de la troisième zone.

11. Procédé selon l'une quelconque des revendications 7 à 10, **caractérisé en ce que** la largeur de la (ou des) nappe(s) de fils co-mêlés est égale à la largeur de la (ou des) bande(s) de tissu et/ou de tricot à laquelle (auxquelles) elle(s) est (sont) associée(s).

12. Procédé selon l'une quelconque des revendications précédentes, **caractérisé en ce que** le poids de verre déposé représente au moins la moitié du poids total de matière déposée sur le convoyeur.

13. Dispositif de mise en oeuvre du procédé selon l'une des revendications 8 et 9, **caractérisé en ce qu'il** comprend : un dispositif de stockage d'enroulements de fils co-mêlés, une machine de coupe alimentée par les fils continus extraits desdits enroulements, un ou plusieurs dispositifs assurant le transfert, le stockage et la répartition des fils co-mêlés coupés sous forme de nappe(s), au moins un dispositif à barillet supportant au moins deux rouleaux de tissu de fils co-mêlés, un convoyeur sur lequel sont déposés lesdits fils coupés et la ou les bandes de tissu, un four de préchauffage disposé à l'extrémité du convoyeur, une presse à double-bandes comportant à sa partie amont des tambours chauffants, à sa partie aval des rouleaux refroidis et dans sa partie centrale une zone de chauffage suivie d'une zone de refroidissement, enfin un dispositif automatique à massicot.

14. Dispositif de mise en oeuvre du procédé selon la revendication 10, **caractérisé en ce qu'**il comprend : un dispositif de stockage d'enroulements de fils co-mêlés, un convoyeur sur lequel sont déposés les fils co-mêlés sous forme de bandes de tissu et de fils continus et, éventuellement, de fils coupés, en amont dudit convoyeur un premier dispositif à barillet supportant au moins deux rouleaux de tissu, au-dessus du convoyeur un ou plusieurs dispositifs de répartition de fils co-mêlés continus, en aval un second dispositif à barillet supportant au moins deux rouleaux de tissu suivi, éventuellement d'un second dispositif de répartition de fil continu ou d'une machine de coupe et d'un dispositif de répartition des fils coupés, un four de préchauffage disposé à l'extrémité du convoyeur, une presse à double-bandes comportant à sa partie amont des tambours chauffants, à sa partie aval des rouleaux refroidis et dans sa partie centrale une zone de chauffage suivie d'une zone de refroidissement, enfin un dispositif automatique à massicot.

## Patentansprüche

1. Verfahren zur Herstellung eines Verbunderzeugnisses, das durch die Verbindung von Glasfäden mit einem thermoplastischen organischen Material im Filamentzustand erhalten wird, welches darin besteht:
• auf ein sich bewegendes Substrat Glasfäden kontinuierlich abzulegen, wovon mindestens 80 Gew.-% Multifilfäden sind, die aus innig miteinander vermischten Glasfilamenten und Filamenten aus thermoplastischem organischem Material bestehen, wobei die Menge an aufgebrachtem Glas mehr als 40 Gew.-% der Gesamtmenge des Materials ausmacht, das in Form von Glasfäden und organischem Material abgelegt wird,
• die Einheit Glasfäden-organisches Material in mehrere Bereiche zu transportieren, worin diese Einheit erwärmt, verdichtet und abgekühlt wird, wobei mit der Erwärmung und/oder Abkühlung dieser Einheit deren Verdichtung einhergeht, und
• diese Einheit zur Form von Platten zuzuschneiden oder sie auf eine sich drehende Trommel aufzuwickeln.

2. Verfahren nach Anspruch 1, **dadurch gekennzeichnet, dass** das Substrat ein Gewebeband ist, das aus Glasfäden gebildet ist, wovon mindestens ein Teil Multifilfäden sind, die aus Glasfilamenten und Filamenten aus thermoplastischem organischem Material bestehen.

3. Verfahren nach Anspruch 1, **dadurch gekennzeichnet, dass** das Substrat ein Fördergurt ist.

4. Verfahren nach einem der vorhergehenden Ansprüche, **dadurch gekennzeichnet, dass** die Glasfäden und das Material, die abgelegt werden, ausschließlich in Form mindestens eines Bandes aus Gewebe und/oder Maschenware, das/die wenigstens teilweise aus Multifilfäden gebildet ist/sind, vorliegen.

5. Verfahren nach einem der Ansprüche 1 bis 3, **dadurch gekennzeichnet, dass** das abgelegte Material ausschließlich in Form von Kurzfäden vorliegt.

6. Verfahren nach einem der Ansprüche 1 bis 3, **dadurch gekennzeichnet, dass** das abgelegte Material ausschließlich in Form von Endlosfäden vorliegt.

7. Verfahren nach einem der Ansprüche 1 bis 3, **dadurch gekennzeichnet, dass** auf dem Substrat mindestens ein Band aus Gewebe und/oder Maschenware, das/die wenigstens teilweise aus Multifilfäden gebildet ist, abgelegt wird, **und dass** ebenfalls mindestens eine Bahn aus Multifilfäden, die zugeschnitten oder endlos sind, abgelegt wird, wobei die Bahn/en mit wenigstens einer Seite des Bandes/der Bänder in Berührung gebracht wird/werden, wonach die so gebildete Einheit aus Fadenbahn/en und Band/Bändern aus Gewebe und/oder Maschenware erwärmt und vor dem Abkühlen und Zuschneiden oder Aufwickeln auf beiden Seiten verdichtet wird.

8. Verfahren nach Anspruch 7, **dadurch gekennzeichnet, dass**
a) auf einem sich bewegenden Fördergurt eine Bahn aus Multifil-Kurzfäden abgelegt wird,
b) auf dieser Bahn ein Band aus einem Gewebe, das ausschließlich aus Multifilfäden gebildet ist, abgelegt wird,
c) gegebenenfalls auf dem Gewebeband eine zweite Bahn aus Multifil-Kurzfäden abgelegt wird,
d) die so aus Bahn/en-Band/Bändern gebildete Einheit in einen ersten Bereich, worin diese Einheit erwärmt wird, und anschließend in einen zweiten Bereich, worin diese Einheit gleichzeitig verdichtet und erwärmt wird, transportiert wird,
e) die Einheit danach in einen dritten Bereich transportiert wird, worin sie verdichtet und abgekühlt wird, und
f) die so abgekühlte Einheit nach dem dritten Bereich zugeschnitten wird.

9. Verfahren nach Anspruch 7, **dadurch gekennzeichnet, dass**
a) auf einem sich bewegenden Fördergurt ein erstes Band aus einem Gewebe, das ausschließlich aus Multifilfäden gebildet ist, abgelegt wird,
b) auf diesem Band eine Bahn aus Multifil-Kurzfäden abgelegt wird,
c) auf dieser Bahn ein zweites Band aus einem Gewebe, das ausschließlich aus Multifilfäden gebildet ist, abgelegt wird,
d) gegebenenfalls auf dem zweiten Gewebeband eine zweite Bahn aus Multifil-Kurzfäden abgelegt wird,
e) die so aus Bahn/en-Band/Bändern gebildete Einheit in einen ersten Bereich, worin diese Einheit erwärmt wird, und anschließend in einen zweiten Bereich, worin diese Einheit gleichzeitig verdichtet und erwärmt wird, transportiert wird,
f) die Einheit in einen dritten Bereich transportiert wird, worin sie verdichtet und abgekühlt wird, und
g) die so abgekühlte Einheit nach dem dritten Bereich zugeschnitten wird.

10. Verfahren nach Anspruch 7, **dadurch gekennzeichnet, dass**
a) auf einem sich bewegenden Fördergurt ein erstes Band aus einem Gewebe, das ausschließlich aus Multifilfäden gebildet ist, abgelegt wird,
b) auf diesem Band ein oder mehrere Multifil-Endlosfäden abgelegt werden,
c) auf diesem/diesen Endlosfaden/Endlosfäden ein zweites Band aus einem Gewebe, das ausschließlich aus Multifilfäden gebildet ist, abgelegt wird,
d) gegebenenfalls auf dem zweiten Gewebeband ein oder mehrere Multifil-Endlosfäden abgelegt werden oder eine Bahn aus Multifil-Kurzfäden abgelegt wird,
e) die so aus Bahn/en-Band/Bändern gebildete Einheit in einen ersten Bereich, worin diese Einheit erwärmt wird, und anschließend in einen zweiten Bereich, worin diese Einheit gleichzeitig verdichtet und erwärmt wird, transportiert wird,
f) die Einheit in einen dritten Bereich transportiert wird, worin sie verdichtet und abgekühlt wird, und
g) die so abgekühlte Einheit nach dem dritten Bereich zugeschnitten wird.

11. Verfahren nach einem der Ansprüche 7 bis 10, **dadurch gekennzeichnet, dass** die Breite der Bahn/en aus Multifilfäden gleich der Breite des/der Bandes/Bänder aus Gewebe und/oder Maschenware ist, mit welchem/welchen sie verbunden wird/werden.

12. Verfahren nach einem der vorhergehenden Ansprüche, **dadurch gekennzeichnet, dass** das Gewicht des aufgebrachten Glases mindestens die Hälfte des Gesamtgewichts des auf den Fördergurt aufgebrachten Materials ausmacht.

13. Vorrichtung zur Durchführung des Verfahrens nach Anspruch 8 oder 9, **dadurch gekennzeichnet, dass** sie eine Einrichtung zur Bevorratung von Multifilfadenspulen, eine Schneidmaschine, der von diesen Spulen abgezogene Endlosfäden zugeführt werden, eine oder mehrere Einrichtungen, die Transport, Lagerung und Verteilung der in Form von (einer) Bahn(en) zugeschnittenen Multifilfäden sicherstellen, mindestens eine Magaziniereinrichtung, die mindestens zwei Rollen Gewebe aus Multifilfaden trägt, einen Fördergurt, auf welchem die Kurzfäden und das/die Gewebeband/Gewebebänder abgelegt werden, einen am Ende des Fördergurtes angeordneten Vorwärmofen, eine Doppelbandpresse, die am hinteren Ende beheizte Trommeln, am vorderen Ende gekühlte Rollen und in der Mitte eine Heizzone, gefolgt von einer Kühlzone, enthält, und schließlich eine automatische Schneideinrichtung umfasst.

14. Vorrichtung zur Durchführung des Verfahrens nach Anspruch 10, **dadurch gekennzeichnet, dass** sie eine Einrichtung zur Bevorratung von Multifilfadenspulen, einen Fördergurt, auf welchem die Multifilfäden in Form von Gewebebändern und Endlosfäden und gegebenenfalls Kurzfäden abgelegt werden, vor dem Fördergurt eine erste Magaziniereinrichtung, die mindestens zwei Geweberollen trägt, über dem Fördergurt eine oder mehrere Einrichtungen für die Verteilung von Multifil-Endlosfäden, danach eine zweite Magaziniereinrichtung, die mindestens zwei Geweberollen trägt, gegebenenfalls von einer zweiten Einrichtung für die Verteilung von Endlosfaden oder einer Schneidmaschine und einer Einrichtung für die Verteilung der Kurzfäden gefolgt, einen am Ende des Fördergurtes angeordneten Vorwärmofen, eine Doppelbandpresse, die am hinteren Ende beheizte Trommeln, am vorderen Ende gekühlte Rollen und in der Mitte eine Heizzone, gefolgt von einer Kühlzone, enthält, und schließlich eine automatische Schneideinrichtung umfasst.

## Claims

1. Process for the manufacture of a composite product obtained by the association of glass threads and a thermoplastic organic material in the filamentary state which consists:
• in depositing continuously on a moving substrate glass threads of which at least 80% by weight are co-blended threads constituted by filaments of glass and by filaments of thermoplastic organic material which are intimately mixed, the amount of glass deposited representing more than 40% by weight of the total amount of material deposited in the form of glass threads and organic material,
• in transferring that assembly of glass threads and organic material to several regions where the assembly is heated, compressed and cooled, the heating and/or cooling of the assembly being accompanied simultaneously by its compression,
• in cutting the assembly in the form of plates or winding it onto a rotating drum.

2. Process according to claim 1, characterised in that the substrate is a strip of woven fabric formed from glass threads, at least some of which are co-blended threads constituted by filaments of glass and by filaments of thermoplastic organic material.

3. Process according to claim 1, characterised in that the substrate is a conveyor.

4. Process according to any one of the preceding claims, characterised in that the glass threads and the material which are deposited are exclusively in the form of at least one strip of woven fabric and/or knitted fabric formed at least in part from co-blended threads.

5. Process according to any one of claims 1 to 3, characterised in that the material deposited is exclusively in the form of cut threads.

6. Process according to any one of claims 1 to 3, characterised in that the material deposited is formed exclusively from continuous threads.

7. Process according to any one of claims 1 to 3, characterised in that at least one strip of woven fabric and/or knitted fabric which are formed at least in part from co-blended threads is deposited on the substrate and in that at least one sheet of cut or continuous co-blended threads is also deposited, the sheet(s) being brought into contact with at least one of the faces of the strip(s), then the resulting assembly of (a) sheet(s) of threads and (a) strip(s) of woven fabric and/or knitted fabric is heated and it is compressed on its two faces before being cooled and cut or wound.

8. Process according to claim 7, characterised in that:
• a) - a sheet of cut co-blended threads is deposited on a moving conveyor,
• b) - a strip of woven fabric formed exclusively from co-blended threads is deposited on the sheet,
• c) - a second sheet of cut co-blended threads is optionally deposited on the strip of woven fabric,
• d) - the assembly of sheet(s) and strip(s) so formed is transferred to a first region where the assembly is heated, then to a second region where the assembly is simultaneously compressed and heated,
• e) - the assembly is then transferred to a third region in which it is compressed and cooled,
• f) - the assembly so cooled is cut at the outlet of the third region.

9. Process according to claim 7, characterised in that:
• a) - a first strip of woven fabric formed exclusively from co-blended threads is deposited on a moving conveyor,
• b) - a sheet of cut co-blended threads is deposited on the strip,
• c) - a second strip of woven fabric formed exclusively from co-blended threads is deposited on the sheet,
• d) - a second sheet of cut co-blended threads is optionally deposited on that last strip of woven fabric,
• e) - the assembly of strip(s) and sheet(s) so formed is transferred to a first region where the assembly is heated, then to a second region where the assembly is simultaneously compressed and heated,
• f) - the assembly is transferred to a third region in which it is compressed and cooled,
• g) - the assembly so cooled is cut at the outlet of the third region.

10. Process according to claim 7, characterised in that:
• a) - a first strip of woven fabric formed exclusively from co-blended threads is deposited on a moving conveyor,
• b) - one or more continuous co-blended threads is (are) deposited on the strip,
• c) - a second strip of woven fabric formed exclusively from co-blended threads is deposited on the continuous thread(s),
• d) - one or more continuous co-blended threads or a sheet of cut co-blended threads is (are) optionally deposited on that last strip of woven fabric,
• e) - the assembly of strip(s) and sheet(s) so formed is transferred to a first region where the assembly is heated, then to a second region where the assembly is simultaneously compressed and heated,
• f) - the assembly is transferred to a third region in which it is compressed and cooled,
• g) - the assembly so cooled is cut at the outlet of the third region.

11. Process according to any one of claims 7 to 10, characterised in that the width of the sheet(s) of co-blended threads is equal to the width of the strip(s) of woven fabric and/or knitted fabric with which it (they) is (are) associated.

12. Process according to any one of the preceding claims, characterised in that the weight of glass deposited represents at least half of the total weight of material deposited on the conveyor.

13. Device for implementing the process according to either claim 8 or claim 9, characterised in that it comprises: a device for storing wound packages of co-blended threads, a cutting machine fed by the continuous threads extracted from the packages, one or more devices providing for the transfer, storage and distribution of the cut co-blended threads in the form of (a) sheet(s), at least one barrel device supporting at least two rolls of woven fabric of co-blended threads, a conveyor on which the cut threads and the strip(s) of woven fabric are deposited, a preheating oven arranged at the end of the conveyor, a double-belt press comprising, at its upstream portion, heating drums, at its downstream portion, cooled rollers and, in its central portion, a heating region followed by a cooling region, and finally an automatic guillotine device.

14. Device for implementing the process according to claim 10, characterised in that it comprises: a device for storing wound packages of co-blended threads, a conveyor on which the co-blended threads are deposited in the form of strips of woven fabric and continuous threads and, optionally, cut threads, upstream of the conveyor a first barrel device supporting at least two rolls of woven fabric, above the conveyor one or more devices for distributing continuous co-blended threads and, downstream, a second barrel device which supports at least two rolls of woven fabric and which is optionally followed by a second device for distributing continuous thread or by a cutting machine and a device for distributing the cut threads, a preheating oven arranged at the end of the conveyor, a double-belt press comprising, at its upstream portion, heating drums, at its downstream portion, cooled rollers and, in its central portion, a heating region followed by a cooling region, and finally an automatic guillotine device.
